# EUROPÄISCHE PATENTSCHRIFT

(11) **EP 2 030 871 B1**
(45) Veröffentlichungstag und Bekanntmachung des Hinweises auf die Patenterteilung: **09.02.2011**
(21) Anmeldenummer: 08015117.8
(22) Anmeldetag: 27.08.2008
(51) Int. Cl.: B62D 25/08, B62D 25/02, B62D 27/02

(54) **Bauteil in Schalenbauweise**
Component of shell-type construction
Composant de structure à coque

(30) Priorität: 03.09.2007 DE 102007041698
(43) Veröffentlichungstag der Anmeldung: 04.03.2009
(73) Patentinhaber: GM Global Technology Operations, Inc., Detroit, MI 48265-3000 (US)
(72) Erfinder: Grusek, Thomas, 55237 Flonheim (DE); Teske, Lothar, 63743 Aschaffenburg (DE)
(74) Vertreter: Spitzfaden, Ralf

(56) Entgegenhaltungen:
- EP-A1- 1 724 185
- DE-A1-102005 038 463
- DE-U1-202004 011 120
- FR-A1- 2 890 361

## Beschreibung

Die Erfindung betrifft ein Bauteil in Schalenbauweise gemäß dem Oberbegriff des Anspruchs 1. Das Bauteil kann als Bestandteil bzw. als Strukturbauteil einer Kfz-Karosserie eingesetzt werden.

Für die Herstellung einer Kraftfahrzeugkarosserie werden vielfach Bauteile in Schalenbauweise eingesetzt, beispielsweise für die Längsträger, den Vorderrahmen, den Hinterrahmen oder den Schweller. Derartige Bauteile sind vielfach Längsprofile, die die Steifigkeit der Karosseriestruktur maßgebend mitbestimmen, und daher mitunter in ihrem Inneren Verstärkungen aufweisen.

Bei der Neuauslegung einer Kraftfahrzeugkarosserie werden in zunehmendem Maße Strukturklebstoffe eingesetzt, um die Dauerlaufanforderungen sowie die Anforderungen für den Fall eines Zusammenpralls mit einem anderen Fahrzeug zu erfüllen. So kann es auch wünschenswert sein, ein Zusatzteil, bspw. eine Verstärkung, in das Innere eines der oben genannten Bauteile in Schalenbauweise einzubringen und dort zu verkleben, beispielsweise deshalb, weil aus Platzgründen das innen liegende Zusatzteil nicht über Punktschweißungen zugänglich ist. Ein anderer Grund kann sein, dass gewisse Teile der Kfz-Karosserie aufgrund ihres Aufbaus nicht geschweißt werden können.

Automobilunternehmen sind weltweit operierende Unternehmen, deren Fertigungsabläufe international koordiniert und weit gehend vereinheitlicht sind. So kann es in einem ersten Produktionsstandort machbar sein, das oben genannte Zusatzteil im Inneren des Bauteils durch Klebung anzubringen und zu gewährleisten, dass der Kleber abgestimmt mit den weiteren Produktionsabläufen aushärten kann, damit die entsprechende Klebekraft gewährleistet wird. An einem zweiten Produktionsstandort ist dies möglicherweise nicht ohne weiteres zu gewährleisten, weil die Lager- und Transportbedingungen der Bauteile zeitlich anders sind, die Fertigungsabläufe zeitlich anders ausgestaltet sind und weiterhin die klimatischen Bedingungen hinsichtlich Temperatur und Luftfeuchtigkeit gänzlich anders sind. Diese Parameter bestimmen jedoch die Klebekraft der gewählten Klebeverbindung. Aus diesem Grund kann am zweiten Produktionsstandort die Klebekraft geringer ausfallen und es daher am zweiten Produktionsstandort vorteilhafter sein, das Bauteil mit dem innen liegenden Zusatzteil nicht etwa zu verkleben, sondern zu verschweißen.

Aus der FR 2 890 361 A1 ist ein gattungsgemäßes Bauteil bekannt. Das Bauteil hat ein erstes metallisches Profilteil und ein zweites metallisches Profilteil, welche zu einem geschlossenen Profil miteinander verbunden sind. Im Inneren des geschlossenen Profils ist ein Zusatzteil eingebracht, welches über eine Schraube mit dem einen Profilteil verschraubt ist. Dazu weist das eine Profilteil eine Durchgangsöffnung auf. Das Zusatzteil ist mit beiden Profilteilen zusätzlich verklebt. Das Zusatzteil ist somit formschlüssig mittels Schraube mit dem einen Profilteil und zugleich mit den beiden Profilteilen stoffschlüssig mittels Verkleben verbunden.

Aus der EP 1 724 185 A1 ist ein Bauteil bekannt, welches aus einem ersten metallischen Profilteil und einem zweiten metallischen Profilteil gebildet ist. Die Profilteile sind zu einem geschlossenen Profil miteinander verbunden. An Flanschbereichen, an welchen die Profilteile miteinander in Verbindung treten, sind die Flanschabschnitte der Profilteile mit Kunststoffmaterial umgeben. Das Bauteil weist in äußeren seitlichen Bereichen eine Querschnittausbildung derart auf, dass die metallischen Profilteile flächig aneinander liegen, sodass ein Freiraum zum Einbringen eines Zusatzteils zwischen den Profilteilen in diesem Abschnitt nicht möglich ist. Die metallischen Profilteile sind in diesem Bereich vollflächig mittels Kunststoffmaterial umgeben.

Aus der DE 10 2005 038 463 A1 ist ein Träger einer Kraftwagenkarosserie bekannt. Der Träger ist durch zwei Profilteile gebildet. Die Profilteile weisen jeweils eine Öffnung auf, um dadurch die Profilteile mittels einer Schraube miteinander zu verbinden.

Ein weiteres Bauteil, welches aus zwei miteinander verbundenen Profilteilen besteht, ist aus der DE 20 2004 011 120 U1 bekannt.

Es ist eine Aufgabe einer Ausführungsform der Erfindung, ein Bauteil in Schalenbauweise so auszugestalten, dass es als weltweit einsetzbares Gleichteil eine gleichbleibend gute Verbindung mit einem innen liegenden Zusatzteil gewährleistet. Eine weitere Aufgabe bezieht sich auf ein Kraftfahrzeug mit diesem Bauteil.

Die Lösung dieser Aufgabe erfolgt mit den Merkmalen der unabhängigen Ansprüche. Vorteilhafte Weiterbildungen und weitere Ausführungsformen ergeben sich mit den Merkmalen der abhängigen Ansprüche.

Ein erster Aspekt der Erfindung betrifft ein Bauteil, das ein erstes und ein zweites metallisches Profilteil umfasst, wobei beide Profilteile jeweils in Schalenbauweise herstellbar oder hergestellt sind. Mit anderen Worten betrifft die Erfindung ein Bauteil in Schalenbauweise. In das Innere des geschlossenen Profils bzw. des Bauteils ist ein Zusatzteil einbringbar und dort an der Innenwand befestigbar. Das erste Profilteil hat im Befestigungsbereich des Zusatzteils eine Mehrzahl durchgehender Öffnungen, wo das Bauteil mit dem Zusatzteil verbindbar ist oder durch die hindurch eines der Profilteile von außen mit dem Zusatzteil verbindbar ist.

Es ist voranzustellen, dass der Begriff geschlossen die Möglichkeit einschließt, das Zusatzteil in das Bauteilinnere einzuführen.

Durch die Öffnungen besteht die Möglichkeit, dass je nach den örtlichen Produktionsbedingungen ein und dasselbe Bauteil entweder mit seinem innen liegenden Zusatzteil verbunden wird, z.B. stoffschlüssig verbunden wird und hierbei zum Beispiel verklebt, verschweißt oder verlötet wird. Wird eine Verklebung gewählt, so wird das Zusatzteil mit aufgebrachtem Kleber in das Bauteilinnere eingebracht und dort verklebt. In diesem Fall spielen die Öffnungen für die Verklebung keine Rolle. Ist Verschweißen die erste Wahl, so wird das Zusatzteil eingebracht und es mit dem Bauteil durch die Öffnungen hindurch verschweißt, d. h., der Schweißstrahl wird durch die Öffnungen durchgeführt. In beiden Fällen wird ein und dasselbe Bauteil verwendet, das in seiner Struktur nicht durch die Öffnungen geschwächt wird und insofern seine Sollfunktionen weiter erfüllen kann.

Unabhängig davon, ob abhängig von den örtlichen Produktionsbedingungen eine Verschweißung, ein Verlöten oder ein Verkleben gewählt wird, ist die Verbindung zwischen dem Bauteil und dem innen liegenden Zusatzteil gleich gut. Die örtlichen Produktionsbedingungen haben damit keinen Einfluss darauf, wie sich das Bauteil bei hoher Zugbelastung verhält bzw. wie es deformierbar ist. Ist das Bauteil Bestandteil einer Kfz-Karosserie, so führt die Benutzung derartiger Bauteile zu einem reproduzierbaren Verhalten bei einem Seiten- oder Frontalaufprall und hilft insofern, diesbezügliche unternehmensinterne Qualitätsstandards oder gesetzliche Vorschriften auch bei Einsatz von Produktionsstandorten mit sehr unterschiedlichen Produktionsbedingungen zuverlässig einzuhalten.

Nach Einbringen des Zusatzteils wird dieses entweder mit der Innenwand des Bauteils verschweißt, z. B. durch MIG-Schweißen oder Laserschweißen, verlötet oder verklebt.

In einer weiteren Ausführungsform handelt es sich bei dem Bauteil um ein Strukturbauteil einer Kfz-Karosserie. Bei solchen Strukturbauteilen ist es zur Verbesserung der Deformationseigenschaften bei einem Frontal- oder Seitenaufprall wünschenswert, an möglichst beliebigen Orten im Bauteilinneren eine Verstärkung platzieren und verkleben zu können, wobei hierfür im Sinne der obigen Ausführungen an allen Produktionsstandorten weltweit dieselbe Klebekraft der Verbindung Bauteil/Zusatzteil gewährleistet werden soll. Dieses Erfordernis lässt sich bei dieser Ausführungsform realisieren.

In einer dritten Ausführungsform ist die Größe der Öffnungen derart bemessen, dass die Mehrzahl der Öffnungen die Deformierbarkeit des Bauteils in eine vorgegebene Richtung nicht herabsetzt. Auf diese Weise zeigt ein Fahrzeug mit diesem Bauteil, bspw. wenn das Bauteil parallel oder quer zur Fahrzeuglängsrichtung ausgerichtet und insbesondere wenn es dabei ein Strukturbauteil ist, kein verschlechtertes Verhalten bei einem Frontal- oder Seitenaufprall. Die Mehrzahl der Öffnungen verändern insofern nicht die Strukturstabilität bzw. die Deformierbarkeit des Bauteils. Die Öffnungen sind keine Gewichtsreduzierungslöcher, sondern sind so klein, dass sie die mechanische Festigkeit des Bauteils unverändert lassen. Beispielsweise kann es sich bei den Öffnungen um Löcher mit einem Durchmesser zwischen 3 mm und 7 mm oder um Langlöcher von 1 mm à 7 mm bis 7 à 15 mm handeln.

In einer weiteren Ausführungsform ist das Bauteil ein Längsprofil, in das das Zusatzteil axial einführbar ist, insbesondere ein solches einer Kfz-Karosserie, bspw. ein Längsprofil, das in Fahrzeuglängs-oder -querrichtung ausgerichtet ist. Geschlossen ist das Bauteil dann senkrecht zur Längsachse, wobei natürlich das Zusatzteil axial eingebracht wird, um bspw. das Verhalten bei einem Frontalzusammenstoß zu verbessern.

In einer weiteren Ausführungsform handelt es sich bei dem Bauteil um einen Vorderrahmen, einen Hinterrahmen oder einen Schweller eines Kraftfahrzeugs. Diese Teile sind sämtlich Strukturbauteile einer Kfz-Karosserie, in die bei einem Seiten- oder Frontalaufprall große Kräfte eingeleitet werden und deren Strukturstabilität durch die Öffnungen nicht gemindert werden darf. Insofern ist ersichtlich, dass die Mehrzahl der Öffnungen keinen Einfluss auf die Deformierbarkeit dieser Bauteile haben darf.

In einer weiteren Ausführungsform ist das Zusatzteil eine (Struktur-) Verstärkung oder ein Lüftungskanal für die Innenraumbelüftung eines Kraftfahrzeugs sein. Es kann aus Metall oder auch aus Kunststoff bestehen.

Ein zweiter Aspekt der Erfindung betrifft ein Kraftfahrzeug bzw. eine Kraftfahrzeugkarosserie, insbesondere eine Pkw-Karosserie, mit einem Bauteil wie oben geschrieben.

Weitere Merkmale und Vorteile der beanspruchten Erfindung werden aus der folgenden detaillierten Beschreibung mit Bezug auf die beigefügten Zeichnungen erkennbar, die nachfolgend als nicht beschränkende Beispiele angegeben sind. Hierbei soll die Benutzung von Bezugszeichen in den Figuren nicht dahingehend verstanden werden, dass die Bezugszeichen den Schutzumfang der beanspruchten Erfindung einschränken sollen. Es zeigen:
- Fig. 1: einen Pkw-Längsträger in der perspektivischen Seitenansicht;
- Fig. 2: einen Schnitt A-A durch den Längsträger der Figur 1,
- Fig. 3: einen Schnitt B-B durch den Längsträger der Figur 1,
- Fig. 4-6: Montageschritte beim Verkleben des Zusatzteils,
- Fig. 7+8: Montageschritt beim Verschweißen des Zusatzteils.

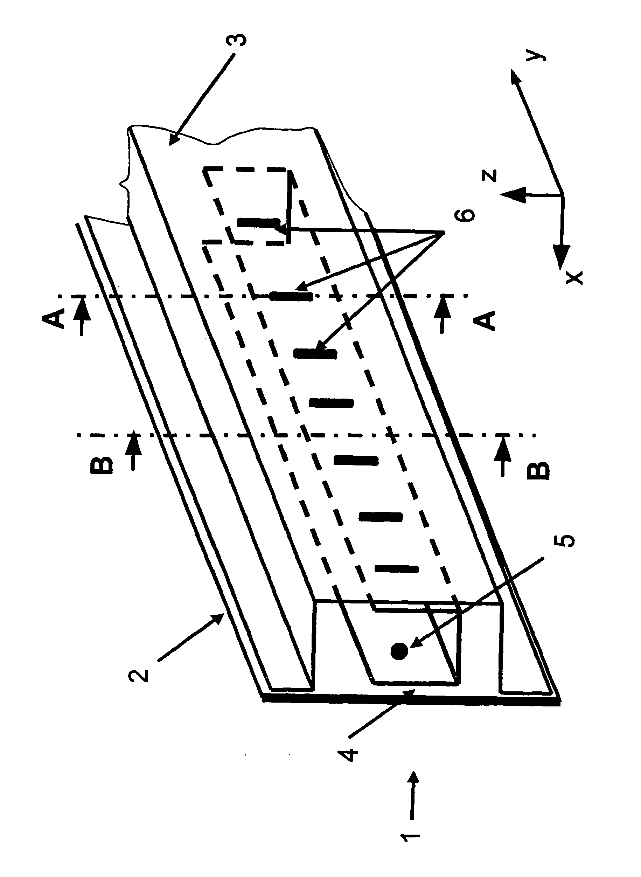

Bei den Figuren, die allgemein mit gleichen Bezugszeichen gleiche Gegenstände bezeichnen, zeigt Figur 1 schematisch und ausschnittsweise einen Längsträger 1, wie er im Motorraum eines Pkws anzutreffen ist. Dieser besteht in seinem mittigen Bereich aus zwei in Schalenbauweise herstellbaren Profilteilen 2 (dem Schließblech) und 3 (dem Rahmen). Zur Verstärkung ist im Inneren ein Zusatzteil 4 eingebracht, das über Schweißpunkte 5 mit dem Profilteil 2 verschweißt ist. Erkennbar sind ebenfalls Öffnungen 6 im Profilteil 3, mit deren Hilfe dieses mit dem Zusatzteil 4 verschweißt oder verklebt wird.

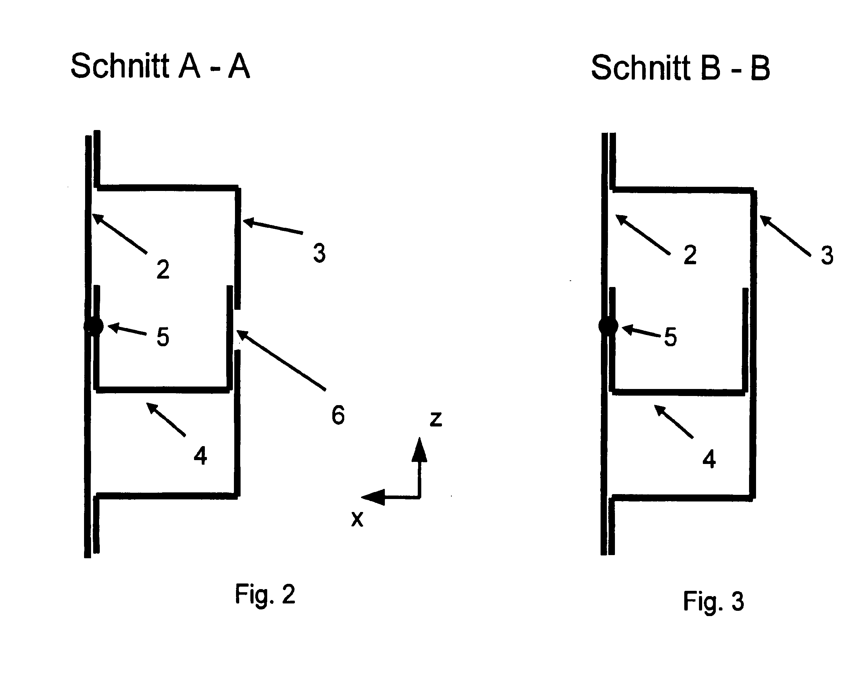

Die Figuren 2 und 3 zeigen den Längsträger 1 der Figur 1 als Schnitte A-A bzw. B-B senkrecht zum in vereinfachender Weise planar dargestellten Profilteil 2 mit Blick in y-Richtung des in Figur 1 eingezeichneten dreidimensionalen Koordinatensystems. Der Schnitt A-A der Figur 2 geht durch eine der Öffnungen 6, wo das Profilteil 3 mit dem Zusatzteil 4 verklebt oder verschweißt wird. Das Zusatzteil 4 selbst ist über den Schweißpunkt 5 mit dem Profilteil 2 verschweißt. Der Schnitt B-B geht nicht durch eine Öffnung 6, sodass eine solche in Figur 3 nicht zu sehen ist.

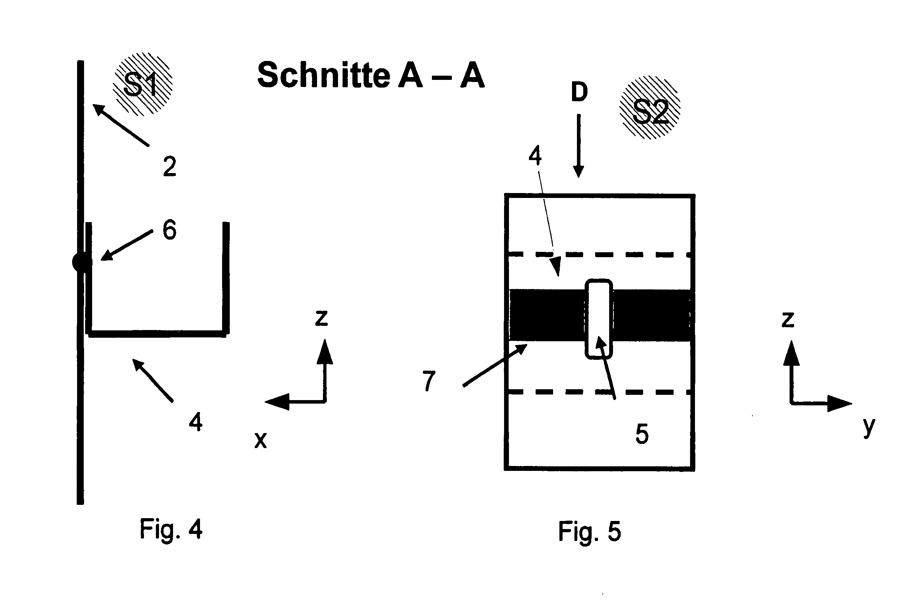

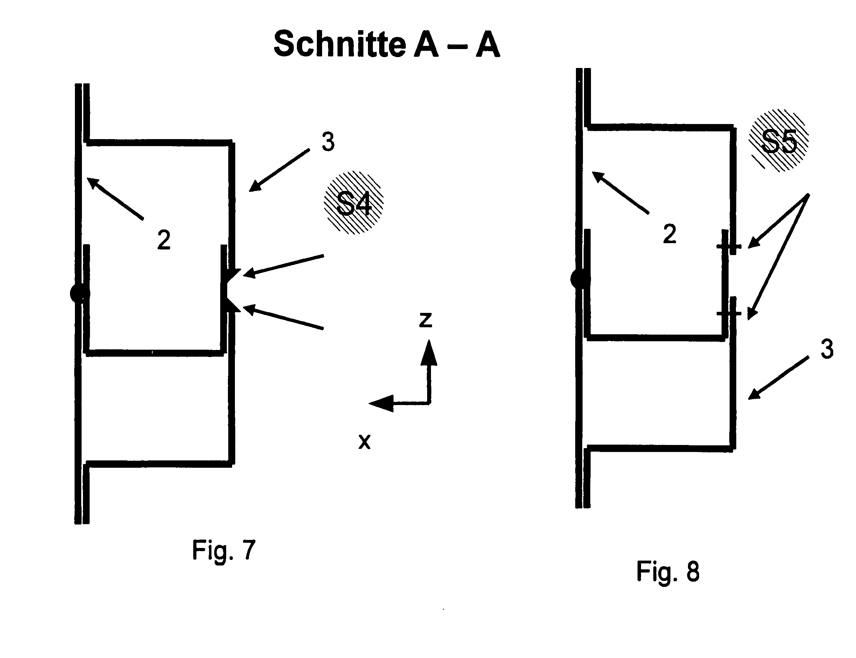

Die Figuren 4 bis 8 zeigen, wie der Zusammenbau des Längsträgers 1 erfolgt, und zwar örtlich im Bereich des Schnitts A-A. Die Figuren 4 bis 6 zeigen dabei die Vorgehensweise beim Verkleben des Zusatzteils 4 und die Figuren 7 und 8 (teilweise) die Vorgehensweise beim Verschweißen.

Gemäß Figur 4, einem Schnitt des Längsträgers in der xz-Ebene, erfolgt in einem ersten Schritt S1 ein Unterzusammenbau Profilteil 2/Zusatzteil 4, indem diese beiden Teile mit mindestens einem Schweißpunkt 6 miteinander verschweißt werden.

Gemäß Figur 5, einer Sicht auf das Zusatzteil 4 in der yz-Ebene, erfolgt in einem zweiten Schritt S2 ein Aufbringen von Klebstoff 7 auf das Zusatzteil 4, und zwar als ein sich in y-Richtung erstreckender Streifen. Damit befindet sich auch um die Öffnung(en) 6 herum Klebstoff 7.

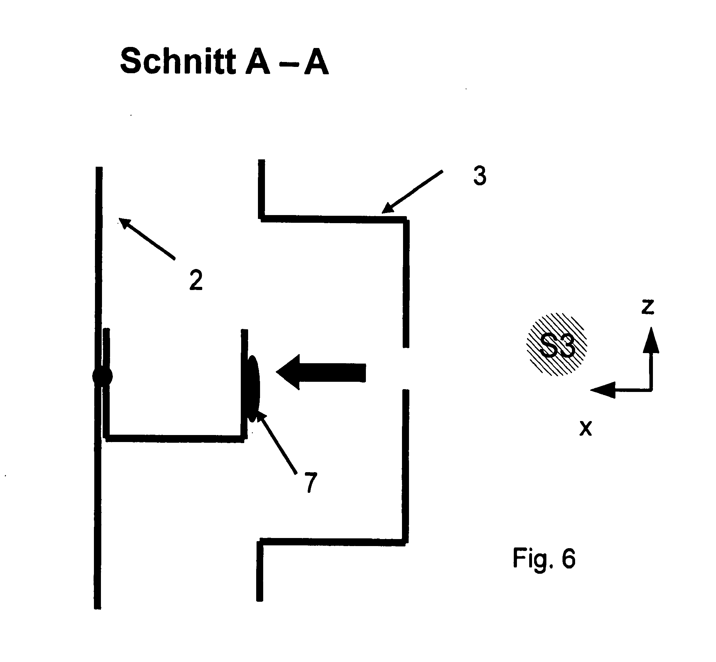

In einem dritten Schritt S3, vgl. Figur 6, wird das Profilteil 3 in x-Richtung herangeführt. Im Endergebnis ergibt sich eine Verklebung des Zusatzteils 4 mit dem Profilteil 3 im Bereich der Öffnung 6.

Figuren 7 und 8 zeigen zwei alternative Vorgehensweisen bei einem Verschweißen des Zusatzteils 4 mit dem Profilteil 3 nach Durchführung der Schritte S1 und S3. Bei Figur 7 wird im Schritt S4 eine Lochschweißung durch die Öffnung 6 in das Profilteil 3 vorgenommen. In Figur 6 erfolgt anstelle des Lochschweißschritts S4 ein Schritt S5, d.h. ein Laserschweißen ohne Füllmaterial um die Öffnung 6 herum in das Profilteil 3.

Obwohl vorstehend eine konkrete Ausführungsform beschrieben wurde, wird der Fachmann erkennen, dass die Beschreibung dieser Ausführungsform nicht zum Zweck hat, die Erfindung in der angegebenen Form zu beschränken. Die Erfindung soll vielmehr alle Modifikationen, Äquivalente und Alternativen umfassen, die in den Schutzumfang der beanspruchten Erfindung fallen.

### Bezugszeichenliste

- 01: Längsträger
- 02: Profilteil
- 03: Profilteil
- 04: Zusatzteil
- 05: Schweißpunkt
- 06: Öffnung
- 07: Klebstoff

- B: Bereich

## Patentansprüche

1. Bauteil umfassend ein erstes metallisches Profilteil (3) und ein zweites metallisches Profilteil (2), welche jeweils in Schalenbauweise herstellbar oder hergestellt sind, wobei die beiden Profilteile (2, 3) zu einem geschlossenen Profil verbunden sind und in das Innere des geschlossenen Profils ein Zusatzteil (4) eingebracht und dort befestigt ist, **dadurch gekennzeichnet, dass** das erste Profilteil (3) im Befestigungsbereich des Zusatzteils (4) eine Mehrzahl durchgehender Öffnungen (6) besitzt, an denen das erste Profilteil (3) mit dem Zusatzteil (4) mittels Kleben verbunden ist oder durch die Öffnungen (6) hindurch eines der Profilteile (2, 3) von außen mit dem Zusatzteil (4) mittels Schweißen oder Löten verbunden ist.

2. Bauteil nach Anspruch 1, **dadurch gekennzeichnet, dass** es sich bei dem Bauteil um ein Strukturbauteil einer Kfz-Karosserie handelt.

3. Bauteil nach einem der vorherigen Ansprüche, **dadurch gekennzeichnet, dass** die Größe der Öffnungen (6) derart bemessen ist, dass die Mehrzahl der Öffnungen (6) die Deformierbarkeit des Bauteils in eine vorgegebene Richtung nicht herabsetzt.

4. Bauteil nach einem der vorherigen Ansprüche, **dadurch gekennzeichnet, dass** die Öffnungen (6) einen Durchmesser von 3 mm bis 7 mm haben oder Langlöcher von 3 mm à 7 mm bis 7 à 15 mm sind.

5. Bauteil nach einem der vorherigen Ansprüche, **dadurch gekennzeichnet, dass** das Bauteil als Längsprofil ausgebildet ist, in das das Zusatzteil (4) axial einführbar ist.

6. Bauteil nach einem der vorherigen Ansprüche, **dadurch gekennzeichnet, dass** es sich um einen Vorderrahmen (1), einen Hinterrahmen oder einen Schweller eines Kraftfahrzeugs handelt.

7. Strukturbauteil einer Kfz-Karosserie mit einem Bauteil nach einem der Ansprüche 1 bis 6 und einem Zusatzteil (4), welches in das Innere des geschlossenen Profils des Bauteils eingebracht und dort befestigt ist, wobei an den Öffnungen (6) das erste Profilteil (3) mit dem Zusatzteil (4) mittels Kleben verbunden ist.

8. Strukturbauteil einer Kfz-Karosserie mit einem Bauteil nach einem der Ansprüche 1 bis 6 und einem Zusatzteil (4), welches in das Innere des geschlossenen Profils des Bauteils eingebracht und dort befestigt ist, wobei durch die Öffnungen (6) hindurch eines der Profilteile (2, 3) von außen mit dem Zusatzteil (4) mittels Schweißen oder Löten verbunden ist.

9. Strukturbauteil nach Anspruch 7 oder 8, **dadurch gekennzeichnet, dass** das Zusatzteil (4) eine Strukturverstärkung oder ein Lüftungskanal ist.

10. Kraftfahrzeug, insbesondere Pkw, mit einem Strukturbauteil nach einem der Ansprüche 7 bis 9.

## Claims

1. A component, comprising a first metallic profiled section (3) and a second profiled metallic section (2), which can each be produced or are produced in monocoque-style construction, with the two profiled sections (2, 3) being connected to form a closed profile, and an additional component (4) is introduced into the interior of the closed profile and is fastened there, **characterized in that** the first profiled section (3) comprises a plurality of through-openings (6) in the fastening region of the additional component (4) where the first profiled section (3) is connected to the additional component (4) by means of gluing, or one of the profiled section (2, 3) is connected through the openings (6) to the additional component (4) from the outside by means of welding or soldering.

2. A component according to claim 1, **characterized in that** the component concerns a structural component of a motor vehicle body.

3. A component according to one of the preceding claims, **characterized in that** the size of the openings (6) is dimensioned in such a way that the plurality of the openings (6) does not reduce the deformability of the component in a predetermined direction.

4. A component according to one of the preceding claims, **characterized in that** the openings (6) have a diameter of 3 mm to 7 mm, or are elongated holes of 3 mm by 7 mm to 7 mm by 15 mm.

5. A component according to one of the preceding claims, **characterized in that** the component is arranged as a longitudinal profiled section into which the additional component (4) can be axially inserted.

6. A component according to one of the preceding claims, **characterized in that** it concerns a front frame (1), a rear frame or a door sill of a motor vehicle.

7. A structural component of a motor vehicle body, comprising a component according to one of the claims 1 to 6 and an additional component (4) which is introduced into the interior of the closed profiled section and is fastened there, with the first profiled section (3) being connected with the additional component (4) at the openings (6) by means of gluing.

8. A structural component of a motor vehicle body, comprising a component according to one of the claims 1 to 6 and an additional component (4) which is introduced into the interior of the closed profiled section and is fastened there, with one of the profiled sections (2, 3) being connected with the additional part (4) through the openings (6) from the outside by means of welding or soldering.

9. A structural component according to claim 7 or 8, **characterized in that** the additional component (4) is a structural reinforcement or a ventilation duct.

10. A motor vehicle, especially a passenger car, comprising a structural component according to one of the claims 7 to 9.

## Revendications

1. Composant comprenant une première pièce profilée métallique (3) et une deuxième pièce profilée métallique (2), qui peuvent être fabriquées ou sont fabriquées chacune en construction monocoque, dans lequel les deux pièces profilées (2, 3) sont assemblées pour former un profilé fermé et une pièce supplémentaire (4) est introduite et fixée à l'intérieur du profilé fermé, **caractérisé en ce que** la première pièce profilée (3) possède dans la zone de fixation de la pièce supplémentaire (4) une pluralité de trous traversants (6) au niveau desquels la première pièce profilée (3) est assemblée par collage à la pièce supplémentaire (4) ou l'une des pièces profilées (2, 3) est reliée par l'extérieur à la pièce supplémentaire (4) à travers les ouvertures (6) par soudage ou brasage.

2. Composant selon la revendication 1, **caractérisé en ce que** le composant est un composant structurel d'une carrosserie de véhicule à moteur.

3. Composant selon l'une des revendications précédentes, **caractérisé en ce que** la taille des ouvertures (6) est dimensionnée de telle sorte que la pluralité d'ouvertures (6) ne diminue pas la déformabilité du composant dans une direction prédéterminée.

4. Composant selon l'une des revendications précédentes, **caractérisé en ce que** les ouvertures (6) ont un diamètre de 3 mm à 7 mm ou sont des trous oblongs de 3 mm à 7 mm jusqu'à 7 à 15 mm.

5. Composant selon l'une des revendications précédentes, **caractérisé en ce que** le composant est conformé comme un profilé allongé, dans lequel la pièce supplémentaire (4) peut être introduite dans le sens axial.

6. Composant selon l'une des revendications précédentes, **caractérisé en ce qu'**il s'agit d'un châssis avant (1), d'un châssis arrière ou d'un seuil d'un véhicule à moteur.

7. Composant structurel d'une carrosserie de véhicule à moteur avec un composant selon l'une des revendications 1 à 6 et une pièce supplémentaire (4) qui est introduite et fixée à l'intérieur du profilé fermé du composant, dans lequel la première pièce profilée (3) est assemblée par collage à la pièce supplémentaire (4) au niveau des ouvertures (6).

8. Composant structurel d'une carrosserie de véhicule à moteur avec un composant selon l'une des revendications 1 à 6 et une pièce supplémentaire (4) qui est introduite et fixée à l'intérieur du profilé fermé du composant, dans lequel l'une des pièces profilées (2, 3) est reliée par l'extérieur à la pièce supplémentaire (4) à travers les ouvertures (6) par soudage ou brasage.

9. Composant structurel selon la revendication 7 ou 8, **caractérisé en ce que** la pièce supplémentaire (4) est un renfort structurel ou un conduit d'aération.

10. Véhicule à moteur, en particulier voiture, avec un composant structurel selon l'une des revendications 7 à 9.
